# EUROPEAN PATENT APPLICATION

(11) **EP 3 932 871 A1**
(43) Date of publication of application: **05.01.2022**
(21) Application number: 20763483.3
(22) Date of filing: 21.01.2020
(51) Int. Cl.: C01G 53/00, H01M 4/485, H01M 4/505, H01M 4/525

(54) **METHOD FOR PRODUCING POSITIVE ELECTRODE ACTIVE SUBSTANCE FOR NON-AQUEOUS ELECTROLYTE SECONDARY BATTERY**

(30) Priority: 27.02.2019 JP 2019034344
(71) Applicant: Panasonic Intellectual Property Management Co., Ltd., Osaka-shi, Osaka 540-6207 (JP)
(72) Inventor: KAWAKITA, Akihiro, Osaka-shi, Osaka 540-6207 (JP); OGASAWARA, Takeshi, Osaka-shi, Osaka 540-6207 (JP); GOSHIMA, Yuji, Osaka-shi, Osaka 540-6207 (JP)
(74) Representative: Vigand, Philippe
(86) International application number: PCT/JP2020/001882
(87) International publication number: WO 2020/174937

(57) **Abstract**

This method for producing a positive electrode active substance for a non-aqueous electrolyte secondary battery is characterized by including: a washing step for washing a lithium-containing transition metal oxide with water and then dehydrating the same so as to obtain a cake-like composition; a tungsten addition step for adding at least a tungsten compound or a tungsten-containing solution to the cake-like composition so as to obtain a tungsten-added product; a first heat treatment step for heat treating the tungsten-added product at a temperature of 180°C or lower; and a second heat treatment step for heat treating the tungsten-added product in an atmosphere other than a reducing atmosphere at a temperature of higher than 180°C to 330°C. This method is further characterized by including a boron addition step for adding a boron compound or a boron-containing solution to the cake-like composition prior to the tungsten addition step, to the tungsten-added product prior to the first heat treatment step or to the tungsten-added product after the first heat treatment step and prior to the second heat treatment step or during the second heat treatment step.

## Description

### TECHNICAL FIELD

The present disclosure relates to a method for producing a positive-electrode active material for a non-aqueous electrolyte secondary battery.

### BACKGROUND ART

A lithium-containing transition metal oxide is used for a positive-electrode active material of a lithium ion secondary battery, which is a non-aqueous electrolyte secondary battery. For example, Patent Literature 1 discloses a method for achieving a high output of a lithium ion secondary battery by lowering the resistance of a positive electrode. This is achieved by attaching a tungstic acid lithium compound on surfaces of primary particles of a lithium-containing transition metal oxide which is expressed by the following general formula: Li_{z}Ni_{1-x-y}CoₓM_{y}O₂ (where 0 ≤ x ≤ 0.35, 0 ≤ y ≤ 0.35, 0.95 ≤ z < 1.30, and M is an element selected from the group consisting of Mn, V, Mg, Mo, Nb, Ti, and Al).

### CITATION LIST

### PATENT LITERATURE

PATENT LITERATURE 1: Japanese Unexamined Patent Application Publication No. 2016-127004

### SUMMARY

As the method disclosed in Patent Literature 1 cannot sufficiently lower the resistance of the positive electrode, further improvement is still desired.

An object of the present disclosure is to provide a method for producing a positive-electrode active material for a non-aqueous electrolyte secondary battery that achieves output characteristics improved from conventional methods by lowering the resistance of a lithium-containing transition metal oxide.

A method for producing a positive electrode active material according to one aspect of the present disclosure includes washing, adding tungsten, first heat treating, second heat treating, and adding boron. In the washing, a lithium-containing transition metal oxide is washed with water and dehydrated to obtain a cake-like composition. In the adding tungsten, at least one of a tungsten compound or a tungsten-containing solution is added to the cake-like composition to obtain a tungsten additive. In the first heat treating, the tungsten additive is heat treated at a temperature of 180°C or lower. In the second heat treating, the tungsten additive is heat treated at a temperature in a range from over 180°C to 330°C in an atmosphere other than a reducing atmosphere. In the adding boron, a boron compound or a boron-containing solution is added to the cake-like composition before the adding of tungsten, to the tungsten additive before the first heat treating, to the tungsten additive before the second heat treating after the first heat treating, or to the tungsten additive during the second heat treating after the first heat treating.

According to one aspect of the present disclosure, a low resistance positive-electrode active material for a non-aqueous electrolyte secondary battery is achieved.

### BRIEF DESCRIPTION OF DRAWINGS

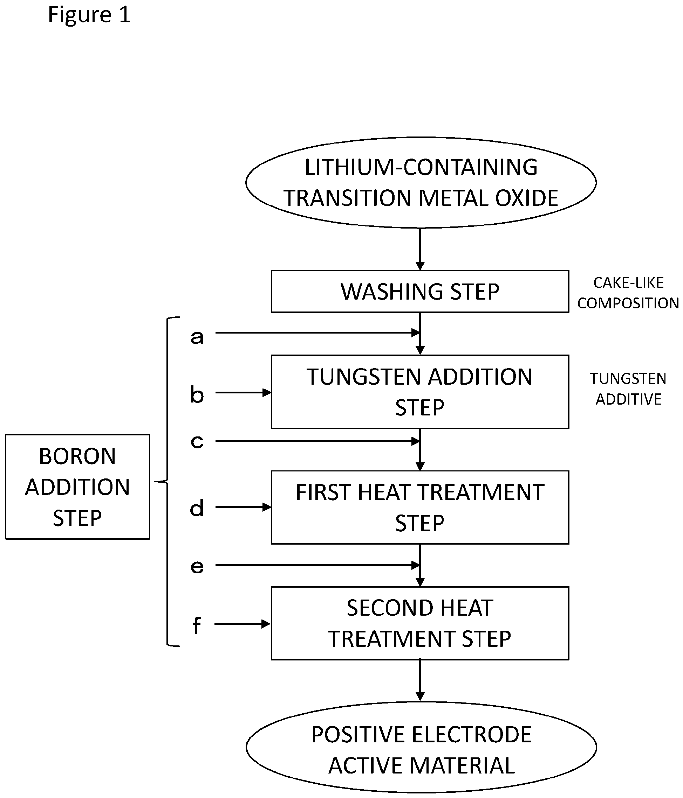

FIG. 1 shows a method for producing a positive-electrode active material for a non-aqueous electrolyte secondary battery according to one embodiment of the present disclosure.

### DESCRIPTION OF EMBODIMENTS

Cation mixing is a phenomenon in which a transition metal, such as nickel, occupies a site for a lithium ion to move into or away from during charging and discharging in a lithium-containing transition metal oxide. When this phenomenon occurs, the resistance of the positive electrode increases, causing a problem that a high output cannot be achieved. For example, Patent Literature 1 discloses a method for lowering the resistance of the positive electrode by forming a lithium tungstate compound on surfaces of primary particles of a lithium-containing transition metal oxide to create a conductive path for lithium ions at an interface with an electrolyte. The lithium-containing transition metal oxide is expressed by the following general formula: Li_{z}Ni_{1-x-y}CoₓM_{y}O₂ (where 0 ≤ x ≤ 0.35, 0 ≤ y ≤ 0.35, 0.95 ≤ z ≤ 1.30, and M is an element selected from the group consisting of Mn, V, Mg, Mo, Nb, Ti, and Al). However, as a result of a diligent analysis by the inventors of the present disclosure, it was found impossible to sufficiently lower the resistance of the positive electrode merely by providing the lithium-ion conductive path created by adding tungsten. The inventors performed further investigations and conceived the method described below for producing a positive-electrode active material for a non-aqueous electrolyte secondary battery.

A method for producing a positive-electrode active material for a non-aqueous electrolyte secondary battery according to one aspect of the present disclosure includes a washing step, a tungsten addition step, a first heat treatment step, a second heat treatment step, and a boron addition step. In the washing step, a lithium-containing transition metal oxide is washed with water and dehydrated to obtain a cake-like composition. In the tungsten addition step, at least one of a tungsten compound or a tungsten-containing solution is added to the cake-like composition to obtain a tungsten additive. In the first heat treatment step, the tungsten additive is heat treated at a temperature of 180°C or lower. In the second heat treatment step, the tungsten additive is heat treated at a temperature in a range from over 180°C to 330°C in an atmosphere other than a reducing atmosphere. In the boron addition step, a boron compound or a boron-containing solution is added to the cake-like composition before the tungsten compound or the tungsten-containing solution is added, to the tungsten additive before the first heat treatment step, to the tungsten additive before the second heat treatment step after the first heat treatment step, or to the tungsten additive during the second heat treatment step after the first heat treatment step. Because surfaces of the lithium-containing transition metal oxide can be protected while providing the lithium ion conductive path using an interaction between tungsten and boron by applying a heat treatment at a temperature in a range from over 180°C to 330°C with tungsten and boron residing on surfaces of the lithium-containing transition metal oxide, the resistance is further lowered.

A method for producing a positive-electrode active material for a non-aqueous electrolyte secondary battery according to the present embodiment is described below in detail for each step.

A synthesizing step of the lithium-containing transition metal oxide used in the present embodiment is described. Initially, a transition metal composite hydroxide, such as a nickel-cobalt-aluminum composite hydroxide obtained by coprecipitation, is heat treated to obtain a transition metal composite oxide. Next, by mixing the transition metal composite oxide and a lithium compound, such as a lithium hydroxide or a lithium carbonate, and grinding the mixture after applying a heat treatment, lithium-containing transition metal oxide particles can be obtained.

The composition of the lithium-containing transition metal oxide can be expressed by the following general formula: Li_{z}Ni_{1-x-y}CoₓM_{y}O₂ (where 0 ≤ x ≤ 0.2, 0 ≤ y ≤ 0.1, 0.97 ≤ z ≤ 1.20, and M is an element selected from the group consisting of Mn, W, Mg, Mo, Nb, Ti, Si, and Al). In this case, because of the high ratio (70 mol% to 80 mol%) of nickel relative to the metals (Ni, Co, M) other than lithium in the lithium-containing transition metal oxide, cation mixing can easily occur. The advantageous effects of the present disclosure are thus more significant.

### [Washing Step]

The washing step is a step to obtain the cake-like composition by washing with water and dehydrating the lithium-containing transition metal oxide (refer to FIG. 1). As the lithium-containing transition metal oxide, the particulate material obtained in the synthesizing step can be used. Washing with water can remove an unreacted portion of the lithium compound added during the synthesizing step of the lithium-containing transition metal oxide described above, or impurities other than the lithium compound. During washing with water, the lithium-containing transition metal oxide in the amount of 300 g to 5,000 g per 1 liter of water can be added. Washing with water may be performed for two or more times. Dehydrating after washing with water may be performed, for example, by filter pressing. By dehydrating, the water content of the cake-like composition after the washing step can be reduced to 10 wt% or lower. The water content of the cake-like composition may be 2 wt% to 10 wt%, more preferably 4 wt% to 8 wt%, in order to make tungsten contained in the tungsten compound or the tungsten-containing solution to be added in a later step easier to spread on surfaces of the lithium-containing transition metal oxide. The water content of the cake-like composition is calculated by obtaining the change in the weight of the cake-like composition between before and after drying the cake-like composition by leaving the cake-like composition in the amount of 10 g in vacuum for 2 hours at 120°C and dividing the obtained change by the weight of the cake-like composition before drying. The water content of the tungsten additive is calculated in the same manner.

### [Tungsten Addition step]

The tungsten addition step is a step to obtain the tungsten additive by adding the tungsten compound or the tungsten-containing solution to the cake-like composition (refer to FIG. 1). Even after the washing step, the lithium compound partially remains in the cake-like composition. At surfaces of the lithium-containing transition metal oxide contained in the cake-like composition, the remaining lithium compound dissolves in water contained in the cake-like composition, producing an alkaline solution. When the tungsten compound is added to the cake-like composition, the tungsten compound dissolves in the alkaline solution, spreading on entire surfaces of the lithium-containing transition metal oxide. Examples of the tungsten compound to be directly added to the cake-like composition are tungsten oxide (WO₃) and lithium tungstate (Li₂WO₄, Li4WOs, Li₆W₂O₉). The tungsten-containing solution may be added to the cake-like composition. The tungsten concentration of the tungsten-containing solution may be, for example, 0.05 mol/L or higher, preferably, 0.1 mol/L to 1 mol/L. Although the tungsten-containing solution is not limited to any particular type as long as the solution contains tungsten, a preferable solution is a solution in which a tungsten compound which is easily dissolvable in an alkaline solution is dissolved in a lithium hydroxide solution. Examples of such a tungsten compound includes a tungsten oxide, a lithium tungstate, and an ammonium tungsten oxide.

### [First Heat Treatment Step]

The first heat treatment step is a step to heat treat the tungsten additive at 180°C or lower (refer to FIG. 1). By drying the tungsten additive, in other word, by evaporating, from the tungsten-containing solution, water residing on surfaces of the tungsten additive, the tungsten compound can be applied on surfaces of the lithium-containing transition metal oxide. Although the heat treatment temperature in the first heat treatment step is not limited to a specific temperature as long as the temperature is 180°C or lower and appropriate to evaporate water from the tungsten compound, a temperature of 100°C or higher is preferable, and a temperature of 150°C or higher is more preferable, in order to increase efficiency. The atmosphere in the first heat treatment step may be, for example, vacuum. Although the heat treatment period of the first heat treatment step is not limited to any specific duration, 0.5 to 10 hours is preferable in order to sufficiently evaporate water from the tungsten-containing solution and form the tungsten compound on surfaces of the lithium-containing transition metal oxide.

### [Second Heat Treatment Step]

The second heat treatment step is a step to heat treat the tungsten additive in an atmosphere other than a reducing atmosphere at a temperature in a range from over 180°C to 330°C after the first heat treatment step, producing a positive-electrode active material (refer to FIG. 1). The atmosphere other than the reducing atmosphere indicates an atmosphere, such as an air atmosphere, an oxygen atmosphere, a decarboxylation atmosphere, vacuum, and an inert gas atmosphere. The decarboxylation atmosphere is an atmosphere in which the carbon dioxide concentration of the air is reduced to 50 ppm or lower, preferably, 20 ppm or lower. By performing the second heat treatment step at a temperature in a range from over 180°C to 330°C that is higher than the melting point of the boron compound, it becomes possible to melt the boron compound or the boron-containing solution which is to be added in the boron addition step described below so as to spread the boron compound or the boron-containing solution on entire surfaces of the lithium-containing transition metal oxide. Although the heat treatment period of the second heat treatment step is not limited to any specific duration, 0.15 to 6 hours is preferable in order to sufficiently melt the boron compound or the boron-containing solution.

A cooling step may be performed after the second heat treatment step. By the cooling step, the compound containing the boron which has been melted in the second heat treatment step can be reprecipitated. Although the cooling step is not limited to any particular step as long as the temperature of the tungsten additive can be lowered by the step, the cooling step may be a slow cooling in which the temperature of the tungsten additive is lowered to 180°C within one hour after the second heat treatment step, or a rapid cooling in which the temperature of the tungsten additive is lowered to 100°C or lower within one hour after the second heat treatment step.

After the second heat treatment step, a cooling step may be performed to lower the temperature of the tungsten additive to 100°C or lower within one hour after the second heat treatment step. In other words, it is preferable to perform the rapid cooling after the second heat treatment step. A shorter cooling period can reduce the amount of impurities attached to surfaces during the cooling step.

### [Boron Addition Step]

The boron addition step is a step to add a boron compound or a boron-containing solution to the cake-like composition before the tungsten addition step in FIG. 1 (Point a), to the tungsten additive before the first heat treatment step (Point b or c), or to the tungsten additive before or during the second heat treatment step (Point d, e, or f).

By adding boron to the tungsten additive, the resistance of the positive electrode can be further lowered by synergistic effects of tungsten and boron. Specifically, not only the conductive path for the lithium ion can be provided but also surfaces of the lithium-containing transition metal oxide can be protected. An advantage to protect surfaces of the lithium-containing transition metal oxide is that the surface structure of the lithium-containing transition metal oxide is maintained during charging or discharging with tungsten and boron coating surfaces of the lithium-containing transition metal oxide.

The boron compound to be directly added to the cake-like composition or to the tungsten additive may be, for example, boric acid (H3BO3), metaboric acid (HBO₂), or tetraboric acid (H₂B₄O₇). Although the particle diameter of the boron compound is not limited to any particular length, in order to achieve a higher dispersibility, a length of 100 µm or shorter is preferable, a length of 50 µm or shorter is more preferable, or a length of 10 µm or shorter is most preferable. The boron-containing solution may be added to the cake-like composition or to the tungsten additive. The boron concentration of the boron-containing solution may be, for example, 0.05 mol/L to 2 mol/L, more preferably, 0.1 mol/L to 1 mol/L. Although the boron-containing solution is not limited to any particular type as long as the solution contains boron, the solution may be, for example, boric acid, metaboric acid, or tetraboric acid. A preferable solution is a boron-containing solution at pH equal to or higher than 7 achieved by further adding lithium hydroxide (LiOH) or lithium carbonate (Li₂CO₃). In this case, it becomes also possible to prevent deterioration of surfaces of the positive-electrode active material (the cake-like composition or the tungsten additive).

The water content of the cake-like composition or the tungsten additive before the boron addition step may be 2 wt% or lower. The water content of the cake-like composition or the tungsten additive higher than 2 wt% would cause flocculation of the cake-like composition or the tungsten additive, lowering the dispersibility of the boron compound.

It is preferable that the boron addition step is performed after the first heat treatment step (Point e or f). Because the first heat treatment step evaporates water contained in the tungsten compound, the tungsten additive powder becomes more powdery, improving the dispersibility of the boron compound.

When the boron addition step is performed before or during the first heat treatment step (Point a, b, c, or d), the first heat treatment step and the second heat treatment step can be successively performed by allowing a predetermined period at a temperature of 180°C or lower, and then another predetermined period at a temperature over 180°C.

The boron addition step may be a step to add boric acid to the cake-like composition or to the tungsten additive. A boric acid compound is more preferable than a boron-containing solution. Because the amount of water to be discharged is less than that of the boron-containing solution, the load to the facility can be limited to the minimum.

The non-aqueous electrolyte secondary battery to which the positive-electrode active material prepared using the above described method is applied can be provided by enclosing, in an enclosure, such as a battery canister or a laminate, an electrode body with non-aqueous electrolyte. The electrode body includes layered or wound electrodes (positive and negative electrodes) and a separator. Examples of the positive electrode, the negative electrode, the separator, and the non-aqueous electrolyte according to the present disclosure are described below.

### <Positive Electrode>

The positive electrode includes, for example, a positive-electrode current collector, such as a metal foil, and positive-electrode mixture layers disposed on the positive-electrode current collector. As the positive-electrode current collector, a foil of a metal that is stable within a potential range of the positive electrode, such as aluminum, or a film or the like in which such a metal is disposed at a surface layer, may be used.

The positive electrode mixture layers may include, in addition to the positive-electrode active material, a conductive material and a binder. As an example, the positive electrode may be prepared by forming the positive electrode mixture layer on both sides of the positive-electrode current collector by applying a positive electrode mixture slurry including the positive-electrode active material, the conductive material, and the binder onto the positive-electrode current collector, drying the applied layers, and rolling the layers.

As the conductive material, carbon powder, such as carbon black, acetylene black, ketjen black, or graphite, may be used alone or in combination of two or more substances.

As the bonding material, fluorine polymer, rubber polymer, or others may be used. For example, polytetrafluoroethylene (PTFE), polyvinylidene fluoride (PVdF), or their denatured bodies may be used as the fluorine polymer, and ethylene-propylene-isoprene copolymer and ethylene-propylene-butadiene copolymer may be used as the rubber polymer. These substances may be used alone or in combination of two or more substances.

### <Negative Electrode>

The negative electrode includes, for example, a negative-electrode current collector, such as a metal foil, and negative-electrode mixture layers disposed on the negative-electrode current collector. As the negative-electrode current collector, a foil of a metal that is stable within a potential range of the negative electrode, such as copper, or a film or the like in which such a metal is disposed at a surface layer, may be used. The negative-electrode mixture layers may include, in addition to the negative-electrode active material, a thickener and a binder. As an example, the negative electrode may be prepared by forming the negative-electrode mixture layer on both sides of the negative-electrode current collector by applying, to the negative-electrode current collector, a negative electrode mixture slurry in which the negative-electrode active material, the thickener, and the binder are dispersed in water at a predetermined weight ratio, dying the applied layers, and rolling the layers.

As the negative-electrode active material, a carbon material in which lithium ions can be inserted or extracted may be used. Other than graphite, non-graphitizing carbons, graphitizing carbons, fibrous carbons, coke, carbon black, or others may be used. Of a non-carbon material, silicon, tin, and their alloys or oxides which mainly contain these materials may be used.

As the binder, PTFE or others may be used similarly as for the positive electrode. Alternatively, styrene-butadiene copolymer (SBR) or their denatured bodies may be used. As the thickener, carboxymethyl cellulose (CMC) or others may be used.

### <Non-aqueous Electrolyte>

As a non-aqueous solvent (organic solvent) of non-aqueous electrolyte, carbonates, lactones, ethers, ketons, esters, or others may be used. Two or more of these solvents may be mixed and used. For example, a cyclic carbonate, a chain carbonate, a mixture solvent of the cyclic carbonate and the chain carbonate may be used. The cyclic carbonate may be, for example, ethylene carbonate, propylene carbonate, and butylene carbonate. The chain carbonate may be, for example, dimethyl carbonate, ethyl methyl carbonate, and diethyl carbonate.

As the electrolyte salt of the non-aqueous solvent, for example, LiPF6, LiBF4, and LiCF₃SO₃ and their mixture may be used. The amount of electrolyte salt solved in the non-aqueous solvent may be, for example, 0.5 to 2.0 mol/L.

### <Separator>

As the separator, a porous sheet or the like that has a high ion permeability and insulation may be used. Specific examples of the porous sheet includes a microporous thin film, a woven cloth, and a non-woven cloth. As the material of the separator, an olefin resin, such as polyethylene and polypropylene, and cellulose may be used. The separator may be a layered body which includes a cellulose fiber layer and a thermoplastic resin fiber layer, such as an olefin resin. The separator may also be multi-layered separator, including a polyethylene layer and a polypropylene layer. An aramid resin or a ceramic material may be applied to the surfaces of the separator.

### EXAMPLES

Although examples according to the present disclosure are described below, the present disclosure is not limited to these examples.

### [Producing Positive-electrode Active Material]

### <Example 1>

An oxide was obtained by heat treating, at 500°C, a nickel cobalt aluminum composite hydroxide expressed by Ni_{0.91}Co_{0.045}Al_{0.045}(OH)₂ which was obtained by coprecipitation. LiOH and the obtained oxide were mixed in a mortar (Ishikawa-type Raikai mortar) to obtain a mixture of Li at a 1.08:1 mole ratio between Li and the entire transition metal. The mixture was introduced into a burning furnace, in which the mixture was burned from the room temperature to 650°C at the temperature rising speed of 2.0°C/min under a 95% concentration oxygen flow (flow of 2 mL/min per 10 cm3 and 5L/min per mixture of 1kg). The mixture was then burned from 650°C to 710°C at the temperature rising speed of 0.5°C/min to obtain particles of lithium nickel cobalt aluminum composite oxide (lithium-containing transition metal oxide) expressed by Li_{1.05}Ni_{0.91}Co_{0.045}Al_{0.045}O₂. The average diameter of secondary particles was about 11 µm. The composition of the particles of the lithium-containing transition metal oxide was analyzed using an ICP optical emission spectrometer.

Pure water of 800 g was added to the particles of 1,000 g of the above lithium nickel cobalt aluminum composite oxide. After stirring, this solution was filtered to extract the cake-like composition, which was washed with pure water and then dehydrated to obtain the cake-like composition after the washing step. The water content of the cake-like composition was 4 wt%.

Next, a tungsten additive of 0.08 wt% water content was obtained by adding WO₃ powder of 0.19 wt% (based on a tungsten element conversion from the lithium-containing transition metal oxide) to the above cake-like composition, performing the first heat treatment step for 3 hours by raising the temperature to 180°C in vacuum, and then cooling to the room temperature by furnace cooling.

Boron acid of 0.01 wt% (based on a boron element conversion from the lithium-containing transition metal oxide) was added to the tungsten additive obtained above and the second heat treatment step was performed for 3 hours in the air atmosphere at 250°C. The positive electrode active material of the first example was prepared by cooling the tungsten additive after the second heat treatment step to 100°C or lower within one hour.

### <Example 2>

The positive electrode active material was prepared by the same method as Example 1 except that the temperature in the second heat treatment step was set to 185°C.

### <Example 3>

The positive electrode active material was prepared by the same method as Example 1 except that the temperature in the second heat treatment step was set to 330°C.

### <Example 4>

The positive electrode active material was prepared by the same method as Example 1 except that the added amount of boron acid was 0.005 wt% (based on a boron element conversion from the lithium-containing transition metal oxide).

### <Example 5>

The positive electrode active material was prepared by the same method as Example 1 except that the added amount of boron acid was 0.05 wt% (based on a boron element conversion from the lithium-containing transition metal oxide).

### <Example 6>

The positive electrode active material was prepared by the same method as Example 1 except that the added amount of boron acid was 0.1 wt% (based on a boron element conversion from the lithium-containing transition metal oxide).

### <Example 7>

WO₃ powder of 0.19 wt% (based on a tungsten element conversion from the lithium-containing metal oxide) and boron acid of 0.01 wt% (based on a boron element conversion from the lithium-containing transition metal oxide) were added at the same time to the cake-like composition after the washing step, and the first heat treatment step was performed for 3 hours at 180°C in vacuum. The second heat treatment step was then performed for 3 hours in the air atmosphere at 250°C. The positive electrode active material of Example 7 was prepared by cooling the tungsten additive after the second heat treatment step to 100°C or lower within 1 hour.

### <Example 8>

The positive electrode active material was prepared by the same method as Example 7 except that, in place of the WO₃ powder, a tungsten-containing solution was added to the cake-like composition. The tungsten-containing solution was prepared by adding WO₃ of 2.4 g to a water solution in which lithium hydroxide (LiOH) of 1 g was dissolved in pure water of 20 g and stirring the water solution. The tungsten-containing solution was added to the cake-like composition to achieve 0.19 wt% (based on the tungsten element conversion from the particles of the lithium-containing transition metal oxide).

<Example 9>

The positive electrode active material was prepared by the same method as Example 1 except that the atmosphere in the second heat treatment step was an oxygen atmosphere.

### <Example 10>

The positive electrode active material was prepared by the same method as Example 1 except that the atmosphere in the second heat treatment step was a decarboxylation atmosphere.

### <Example 11>

The positive electrode active material was prepared by the same method as Example 1 except that the tungsten additive after the second heat treatment step was cooled to 180°C within 1 hour.

### <Example 12>

The boron-containing solution was prepared by adding boron acid of 6.4 g to a water solution in which lithium hydroxide (LiOH) of 0.24 g was dissolved in pure water of 15 g, and stirring the water solution. The positive electrode active material was prepared by the same method as Example 1 except that, in place of boron acid, a boron-containing solution was added to achieve 0.01 wt% (based on the boron element conversion from particles of the lithium-containing transition metal oxide).

### <Comparative Example 1>

The positive electrode active material was prepared by the same method as Example 1 except that the boron acid was not added and the second heat treatment step was not performed.

### <Comparative Example 2>

The positive electrode active material was prepared by the same method as Comparative Example 1 except that, in place of WO₃ powder, a tungsten-containing solution was added to the cake-like composition. The tungsten-containing solution was prepared by adding Wo3 of 2.4 g to a water solution in which lithium hydroxide (LiOH) of 1 g was dissolved in pure water of 20 g, and stirring the water solution. The tungsten-containing solution was added to the cake-like composition to achieve 0.19 wt% (based on the tungsten element conversion from particles of lithium-containing transition metal oxide).

### <Comparative Example 3>

The positive electrode active material was prepared by the same method as Example 1 except that boron acid was not added.

### <Comparative Example 4>

The positive electrode active material was prepared by the same method as Example 8 except that the second heat treatment step was not performed.

### <Comparative Example 5>

The positive electrode active material was prepared by the same method as Example 1 except that the temperature of the second heat treatment step was set to 150°C.

### <Comparative Example 6>

The positive electrode active material was prepared by the same method as Example 1 except that the temperature of the second heat treatment step was set to 400°C.

### <Comparative Example 7>

The positive electrode active material was prepared by the same method as Example 7 except that tungsten was not added.

<Comparative Example 8>

The positive electrode active material was prepared by performing only the washing step and the first heat treatment step same as the Example 1, without adding tungsten or boron acid, or performing the second heat treatment step.

### <Comparative Example 9>

The positive electrode active material was prepared by the same method as Example 1 except that tungsten was not added.

### <Comparative Example 10>

The positive electrode active material was prepared by the same method as Example 1 except that tungsten and boron acid were not added.

### [Preparation of Positive Electrode]

The positive electrode active material prepared in Examples 1 to 11 and Comparative Examples 1 to 10, acetylene black, polyvinylidene fluoride were mixed at the mass ratio of 85:10:5. The mixture was kneaded in an agate mortar using a pestle to form a thin palette shape. After being rolled to a predetermined thickness by a roller, an electrode of a predetermined circular shape was punched from the rolled palette.

### [Preparation of Non-aqueous Electrolyte]

Ethylene carbonate (EC), methyl ethyl carbonate (MEC), and dimethyl carbonate (DMC) were mixed at the volume ratio of 20:5:75. The non-aqueous electrolyte was prepared by dissolving lithium hexafluorophosphate (LiPF₆) in the mixed solvent to achieve a concentration of 1.2 mol/L.

### [Preparation of Test Cell]

An electrode body was prepared by stacking the positive electrode of Example 1 and the negative electrode of a lithium metal to face each other via the separator. A test cell was then prepared by inserting the electrode body and the non-aqueous electrolyte described above in an aluminum casing of a coin shape, which was sealed by being pressed by a press. The test cells for the other examples and the comparative examples were prepared by the same method.

### [Measuring Reaction Resistance]

For the test cell described above, under the temperature of 25°C, a constant current charging at 0.7 mA was performed until the cell voltage reached 4.3 V, and a constant voltage charging at 4.3 V was then performed until the electric current reached 0.07 mA. Successively, a constant current discharge at 0.7 mA was performed until the cell voltage dropped to 2.5 V. Then again, under the temperature of 25°C, a constant current charging at 0.7 mA was performed until the cell voltage reached 4.3 V, and a constant voltage charging at 4.3 V was then performed until the electric current reached 0.07 mA. Next, the AC impedance of the test cell was measured in a range from 20 kHz to 0.01 Hz using an AC impedance meter. A Cole-Cole plot was generated based on the measured data. The reaction resistance was obtained based on the arch size in a range from 10 Hz to 0.1 Hz. Regarding the reaction resistances shown in Table 1, the reaction resistance of the test cell containing the positive electrode active material of Comparative Example 1 is assumed to be 100. The reaction resistances of the other test cells are relative values to this reaction resistance.

**[Table 1]**

| | W Addition | | B Addition | | Second Heat Treatment | | | Reaction Resistance |
|---|---|---|---|---|---|---|---|---|
| | Timing | Compound or Solution | Timing | Added Amount (wt%) | Temp. (°C) | Atmosphere | Cooling | |
| Example 1 | After Washing Process | Compound | After First Heat Treatment | 0.01 | 250 | Air | Rapid | 60 |
| Example 2 | After Washing Process | Compound | After First Heat Treatment | 0.01 | 185 | Air | Rapid | 99 |
| Example 3 | After Washing Process | Compound | After First Heat Treatment | 0.01 | 330 | Air | Rapid | 98 |
| Example 4 | After Washing Process | Compound | After First Heat Treatment | 0.005 | 250 | Air | Rapid | 65 |
| Example 5 | After Washing Process | Compound | After First Heat Treatment | 0.05 | 250 | Air | Rapid | 65 |
| Example 6 | After Washing Process | Compound | After First Heat Treatment | 0-1 | 250 | Air | Rapid | 71 |
| Example 7 | After Washing Process | Compound | After Washing Process | 0.01 | 250 | Air | Rapid | 90 |
| Example 8 | After Washing Process | Solution | After Washing Process | 0.01 | 250 | Air | Rapid | 90 |
| Example 9 | After Washing Process | Compound | After First Heat Treatment | 0.01 | 250 | Oxygen | Rapid | 57 |
| Example 10 | After Washing Process | Compound | After First Heat Treatment | 0.01 | 250 | Decarboxylation | Rapid | 61 |
| Example 11 | After Washing Process | Compound | After First Heat Treatment | 0.01 | 250 | Air | Slow | 70 |
| Example 12 | After Washing Process | Compound | After First Heat Treatment | 0.01 (Solution) | 250 | Air | Rapid | 88 |
| Comparative Example 1 | After Washing Process | Compound | None | | None | | | 100 |
| Comparative Example 2 | After Washing Process | Solution | None | | None | | | 100 |
| Comparative Example 3 | After Washing Process | Compound | None | | 250 | Air | Rapid | 150 |
| Comparative Example 4 | After Washing Process | Solution | After Washing Process | 0.01 | None | | | 110 |
| Comparative Example 5 | After Washing Process | Compound | After First Heat Treatment | 0.01 | 150 | Air | Rapid | 180 |
| Comparative Example 6 | After Washing Process | Compound | After First Heat Treatment | 0.01 | 400 | Air | Rapid | 220 |
| Comparative Example 7 | None | | After Washing Process | 0.01 | 250 | Air | Rapid | 340 |
| Comparative Example 8 | None | | None | | None | | | 350 |
| Comparative Example 9 | None | | After First Heat Treatment | 0.01 | 250 | Air | Rapid | 500 |
| Comparative Example 10 | None | | None | | 250 | Air | Rapid | 600 |

The reaction resistances in Examples 1 to 12 were confirmed to be lower than that in Comparative Example 1. In other words, it was confirmed that, in accordance with the method for producing the positive electrode active material for non-aqueous electrolyte secondary battery according to one aspect of the present disclosure, it became possible to prepare a non-aqueous electrolyte secondary battery with a lower resistance and improved output characteristics than conventional non-aqueous electrolyte secondary batteries. Further, because the reaction resistance in rapidly-cooled Example 1 was lower than that in slowly cooled Example 11, it was confirmed that rapid cooling was more preferable. In contrast, the reaction resistances in Comparative Examples 3 to 10 were higher than that in Comparative Example 1. Further, the reaction resistance in Comparative Example 2 was equal to that in Comparative Example 1.

## Claims

1. A method for producing a positive electrode active material for a non-aqueous electrolyte secondary battery, the method comprising:
washing with water and dehydrating a lithium-containing transition metal oxide to obtain a cake-like composition;
adding tungsten by adding at least one of a tungsten compound or a tungsten-containing solution to the cake-like composition to obtain a tungsten additive;
first heat treating that heat treats the tungsten additive at a temperature of 180°C or lower; and
second heat treating that heat treats the tungsten additive at a temperature in a range from over 180°C to 330°C in an atmosphere other than a reducing atmosphere,
wherein the method further comprises adding boron by adding a boron compound or a boron-containing solution to the cake-like composition before the adding of tungsten, to the tungsten additive before the first heat treating, to the tungsten additive before the second heat treating after the first heat treating, or to the tungsten additive during the second heat treating after the first heat treating.

2. The method for producing the positive electrode active material for the non-aqueous electrolyte secondary battery according to claim 1, wherein the lithium-containing transition metal oxide is expressed by a general formula: Li_{z}Ni_{1-x-y}CoₓM_{y}O₂, where 0 ≤ x ≤ 0.2, 0 ≤ y ≤ 0.1, 0.97 ≤ z ≤ 1.20, and M is at least one element selected from the group consisting of Mn, W, Mg, Mo, Nb, Ti, Si, and Al.

3. The method for producing the positive electrode active material for the non-aqueous electrolyte secondary battery according to claim 1 or 2, wherein the adding boron is performed after the first heat treating.

4. The method for producing the positive electrode active material for the non-aqueous electrolyte secondary battery according to any one of claims 1 to 3, wherein
the water content of the cake-like composition after the washing is 10 wt% or lower, and the water content of the cake-like composition or the tungsten additive before the adding boron is 2 wt% or lower.

5. The method for producing the positive electrode active material for the non-aqueous electrolyte secondary battery according to any one of claims 1 to 4, wherein
in the adding boron, the boron compound is boron acid.

6. The method for producing the positive electrode active material for the non-aqueous electrolyte secondary battery according to any one of claims 1 to 5, wherein
the method further comprises cooling the tungsten additive after the second heat treating such that the temperature of the tungsten additive drops to 100°C or lower within one hour after the second heat treating.
